# EUROPÄISCHE PATENTSCHRIFT

(11) **EP 1 236 526 B1**
(45) Veröffentlichungstag und Bekanntmachung des Hinweises auf die Patenterteilung: **28.01.2004**
(21) Anmeldenummer: 02002613.4
(22) Anmeldetag: 05.02.2002
(51) Int. Cl.: B22F 3/105, B29C 67/00

(54) **Verfahren und Vorrichtung zum selektiven Lasersintern**
Process and device for selectively laser sintering
Procede et appareil pour le frittage au laser selectif

(30) Priorität: 22.02.2001 DE 10108612
(43) Veröffentlichungstag der Anmeldung: 04.09.2002
(73) Patentinhaber: DaimlerChrysler AG, 70567 Stuttgart (DE)
(72) Erfinder: Manetsberger, Karsten, 89077 Ulm (DE); Shen, Jialin, 89134 Blaustein (DE); Steinberger, Jürgen, 82194 Gröbenzell (DE)

(56) Entgegenhaltungen:
- EP-A- 0 556 291
- DE-A- 4 439 124
- US-A- 5 597 589

## Beschreibung

Die Erfindung betrifft ein Verfahren und eine Vorrichtung zum selektiven Lasersintern, bei dem Pulver schichtweise in einen ummantelten Bauraum gegeben wird und einen Pulverkuchen bildet, der mittels Laserstrahlung schichtweise verfestigt wird.

Selektives Lasersintem (SLS, Selective Laser Sintering) ist ein Rapid-Prototyping-Verfahren, bei dem eine in einen Bauraum absenkbare Plattform (Bauraumboden) eine Pulverschicht trägt, die durch einen Laserstrahl in ausgewählten Bereichen erhitzt wird, so dass die Pulverpartikel zu einer ersten Schicht verschmelzen. Anschließend wird die Plattform um etwa 50 bis 200 µm (je nach Partikelgröße und -art) nach unten in den Bauraum gesenkt und eine neue Pulverschicht aufgebracht. Der Laserstrahl zeichnet wieder seine Bahn und verschmilzt die Pulverpartikel der zweiten Schicht miteinander sowie die zweite mit der ersten Schicht. Auf diese Weise entsteht nach und nach ein vielschichtiger Pulverkuchen und in ihm ein Bauteil, zum Beispiel eine Spritzgussform.

Innerhalb des Bauraums erfahren bestimmte Bereiche - abhängig von der Geometrie des herzustellenden Bauteils - für einen längeren oder kürzeren Zeitraum eine Erwärmung durch den Laserstrahl während andere gar nicht erwärmt werden. Außerdem wird nur die jeweils oberste Pulverschicht durch den Laser erwärmt, die unteren Schichten geben die aufgenommene Wärme an ihre Umgebung und kühlen ab. Die Folge sind inhomogene Temperaturverteilungen und thermische Spannungen innerhalb des Pulverkuchens, die zu Bauteilverzug führen können.

In der EP 556 291 wurde zur Minimierung dieses Problems bereits vorgeschlagen, eine einheitliche Basistemperatur der jeweiligen Oberflächenschicht mittels eines parallel über ihr angebrachten ringförmigen Heizstrahlers einzustellen. Daraus solle eine gleichmäßigere Abkühlung der einzelnen Schichten und damit ein geringerer Bauteilverzug resultieren.

Eigene Untersuchungen haben jedoch ergeben, daß weiterhin Temperaturgradienten innerhalb und zwischen den einzelnen Schichten auftreten, wobei insbesondere die erstgenannten zu Bauteilverzug führen, der zumindest bei qualitativ hochwertigen Bauteilen nicht tolerierbar ist

Der Erfindung liegt die Aufgabe zugrunde, ein Verfahren sowie eine Vorrichtung zum selektiven Lasersintern zu schaffen, bei welchen die Temperatur innerhalb einer Schicht des aufgeschütteten Pulverkuchens möglichst homogen ist und ausgehend von den gesinterten Bereichen der Oberfläche bis zum Boden des Bauraums möglichst gleichmäßig absinkt

Diese Aufgabe wird bei einem gattungsgemäßen Verfahren durch die kennzeichnenden Merkmale des Anspruchs 1 gelöst. Ein Verfahren nach dem ersten Teil des Anspruchs 1 ist aus DE-A-4 439 124 bekannt.

Das erfindungsgemäß durchgeführte selektive Lasersintern vermindert Bauteilverzug, da die Temperaturverteilung innerhalb einer Schicht des aufgeschütteten Pulverkuchens besser homogenisiert wird und ausgehend von den gesinterten Bereichen der Oberfläche bis zum Boden des Bauraums gleichmäßiger absinkt.

Diese Homogenisierung der Temperaturverteilung innerhalb einer Schicht und der Temperaturabnahme wird erzielt, indem man mittels der Mantelheizung eine zusätzliche Temperaturverteilung mit in Bauraumbodenrichtung absinkender Temperatur zu der von der Laserstrahlung und ggf. der von der einem ringförmigen Heizstrahler erzeugten Temperaturverteilung überlagert. Diese zusätzliche Temperaturverteilung darf natürlich keine Temperaturen erreichen, die ein eigenständiges Sintern der Pulverpartikel bewirken würden. Sie gibt vielmehr eine im Wesentlichen einheitliche Basistemperatur der einzelnen Pulverschichten vor, so daß die Temperaturabgabe der gesinterten Bereiche innerhalb einer Schicht minimiert wird und ein Temperaturfluß von den gesinterten Bereichen in die Tiefe, also senkrecht zu den Pulverschichten, gefördert wird. Eine geeignete Temperaturverteilung ist z.B. eine lineare.

Der Pulverkuchen wächst durch die Zugabe von neuen Pulverschichten ständig an und wird dabei in den Bauraum abgesenkt. Die Oberfläche des Pulverkuchens grenzt dabei immer an die Oberkante des Bauraums. Die absinkende Plattform des Bauraumbodens entfernt sich jedoch immer weiter von der Pulveroberfläche und grenzt an Bereiche der Bauraumwandung an, die mit zunehmender Tiefe immer niedrigere Temperaturen aufweisen.

Es ist daher vorteilhaft, wenn die Mantelheizung eine Bauraumbodenheizung umfaßt, die derart gesteuert wird, daß die Temperatur des Bauraumbodens zu jedem Zeitpunkt an die Temperatur des Bereiches der Bauraumwandung angepaßt wird, an den sie zu diesem Zeitpunkt angrenzt.

Besonders vorteilhaft ist es eine beliebige, z.B. auch nicht lineare und zeitlich veränderliche Temperaturverteilung der Mantelheizung vorzugeben, die mittels einer Simulation des Lasersinterprozesses in Hinsicht auf eine Reduzierung des Bauteilverzuges optimiert wurde. Simulationen des Energieeintrages des Lasers in die Pulverschichten wurden bereits vorgeschlagen, beispielsweise in der DE 10050280, die sich dadurch ergebenden Temperaturverteilungen innerhalb des Pulverkuchens können mit bekannten Verfahren, z.B. durch Lösen der Wärmeleitungsgleichung, ebenfalls ermittelt werden und ebenso die Beeinflussung dieser Temperaturverteilung durch Überlagerung einer Mantelheizung. Optimierungsverfahren sind dem Fachmann ebenfalls bekannt. Einzelne Schritte der Simulation können experimentell verifiziert oder ersetzt werden.

Die Aufgabe wird bei einer gattungsgemäßen Vorrichtung durch die kennzeichnenden Merkmale des Anspruchs 5 gelöst.

Die Mantelheizung gibt eine im Wesentlichen einheitliche Basistemperatur der einzelnen Pulverschichten vor, so daß die Temperaturabgabe der gesinterten Bereiche innerhalb einer Schicht minimiert wird und ein Temperaturfluß von den gesinterten Bereichen in die Tiefe, also senkrecht zu den Pulverschichten, gefördert wird. Dadurch werden thermische Spannungen minimiert und ebenso ein daraus resultierender Bauteilverzug.

Die Mantelheizung ist derart gestaltet, daß sie unterschiedliche Bereiche des Mantels separat temperieren kann. Bei einem beispielsweise zylinderförmig gestalteten Bauraum kann dies auf einfache Weise mittels parallel übereinander angeordneten Heizringen erfolgen, die konzentrisch um den Bauraum angeordnet sind. Zusätzlich zu einer derartigen Heizung kann auch eine aktive Kühlung mittels Kühlmittel (z.B. Wasser) enthaltenen Kühlkreisen (z.B. Rohrleitungen) vorteilhaft sein.

Dabei erweist sich als besonders vorteilhaft, wenn die einzelnen Heizringe auch über mindestens eine Regeleinrichtung separat geregelt werden können und diese mindestens eine Regeleinrichtung eine Eingabeeinheit aufweist, in die eine Temperaturverteilung eingegeben werden kann. Diese Temperaturverteilung kann beispielsweise eine mittels Simulation des Lasersinterprozesses in Hinsicht auf Homogenität und/oder eine Reduzierung des Bauteilverzugs optimierte sein.

## Patentansprüche

1. Verfahren zum selektiven Lasersintern eines Pulvers
bei dem Pulver schichtweise in einen ummantelten Bauraum gegeben wird
und einen Pulverkuchen bildet,
wobei die Ummantelung beheizt wird, derart,
dass sich eine Temperaturverteilung in der Ummantelung einstellt,
wobei die Temperatur ausgehend von den an die zuletzt gesinterte Oberfläche des Pulverkuchens angrenzenden Bereichen der Ummantelung in Richtung auf den Bauraumboden hin abnimmt,
wobei unterschiedliche Bereiche der Ummantelung separat temperiert werden können
**dadurch gekennzeichnet,**
**dass** die Beheizung mittels parallel übereinander angeordneter Heizringe erfolgt,
die konzentrisch um den Bauraum angeordnet sind.

2. Verfahren nach Anspruch 1,
**dadurch gekennzeichnet,**
**dass** die Heizringe derart geregelt werden,
**dass** die Temperaturverteilung im wesentlichen linear abnimmt.

3. Verfahren nach Anspruch 1 oder 2,
**dadurch gekennzeichnet,**
**dass** die Mantelheizung auch eine Bauraumbodenheizung umfasst und
**dass** die Bauraumbodenheizung gesteuert wird, derart,
**dass** die Temperatur des Bauraumbodens zu jedem Zeitpunkt der Temperatur des angrenzenden Bereiches der Bauraumwandung entspricht.

4. Verfahren nach Anspruch 1,
**dadurch gekennzeichnet,**
**dass** eine Temperaturverteilung der Mantelheizung vorgegeben wird,
die in Hinsicht auf eine Reduzierung des Bauteilverzugs optimiert wurde,
durch Simulation des Energieeintrages des Lasers in die Pulverschichten,
der sich dadurch ergebenden Temperaturverteilung innerhalb des Pulverkuchens
sowie der Beeinflussung dieser Temperaturverteilung
durch die Überlagerung der Mantelheizung.

5. Vorrichtung zum selektiven Lasersintern eines Pulvers
mit einem ummantelten Bauraum zur Aufnahme des Pulvers
und einer den Bauraum umschließenden Mantelheizung,
wobei die Mantelheizung unterschiedliche Bereiche des Mantels separat temperieren kann,
**dadurch gekennzeichnet,**
**dass** die Mantelheizung parallel übereinander angeordnete Heizringe aufweist, die konzentrisch um den Bauraum angeordnet sind.

6. Vorrichtung nach Anspruch 5,
**dadurch gekennzeichnet,**
**dass** der Bauraum zylinderförmig aufgebaut ist:

7. Vorrichtung nach Anspruch 6,
**dadurch gekennzeichnet,**
**dass** sie mindestens eine Regeleinrichtung aufweist
zur separaten Regelung der einzelnen Heizringe.

8. Vorrichtung nach Anspruch 7,
**dadurch gekennzeichnet,**
**dass** die mindestens eine Regeleinrichtung eine Eingabeeinheit aufweist
zur Eingabe einer mittels der Heizringe einzustellenden Temperaturverteilung.

9. Vorrichtung nach einem der vorhergehenden Ansprüche 5 bis 8,
**dadurch gekennzeichnet,**
**dass** sie zusätzlich eine aktive Kühlung aufweist.

## Claims

1. Method for selective laser sintering of a powder, in which powder is introduced in layers into an encased construction space and forms a powder cake, the casing being heated in such a way that a temperature distribution is brought about in the casing, the temperature decreasing, starting from those areas of the casing adjacent to that surface of the powder cake sintered last, in the direction towards the construction space bottom, it being possible to control the temperature of different areas of the casing separately, **characterized in that** the heating is carried out by means of heating rings which are arranged parallel one above another and concentrically around the construction space.

2. Method according to Claim 1, **characterized in that** the heating rings are regulated in such a way that the temperature distribution decreases essentially linearly.

3. Method according to Claim 1 or 2, **characterized in that** the casing heating system also comprises a construction space bottom heating system, and **in that** the construction space bottom heating system is controlled in such a way that the temperature of the construction space bottom corresponds at any time to the temperature of the adjacent area of the construction space wall.

4. Method according to Claim 1, **characterized in that** a temperature distribution of the casing heating system is defined, which has been optimized with regard to reduction of component distortion, by simulation of the energy input of the laser into the powder layers, of the resulting temperature distribution inside the powder cake and also of the influence on this temperature distribution of the superimposition of the casing heating system.

5. Device for selective laser sintering of a powder with an encased construction space for receiving the powder and a casing heating system surrounding the construction space, the casing heating system being capable of controlling the temperature of different areas of the casing separately, **characterized in that** the casing heating system has heating rings which are arranged parallel one above another and concentrically around the construction space.

6. Device according to Claim 5, **characterized in that** the construction space is of cylindrical design.

7. Device according to Claim 6, **characterized in that** it has at least one regulating arrangement for separate regulation of the individual heating rings.

8. Device according to Claim 7, **characterized in that** the at least one regulating arrangement has an input unit for input of a temperature distribution to be set by means of the heating rings.

9. Device according to one of the preceding claims 5 to 8, **characterized in that** it additionally has active cooling.

## Revendications

1. Procédé de frittage sélectif au laser d'une poudre avec lequel la poudre est progressivement amenée dans un espace de construction d'enrobage et forme un pain de poudre, l'enrobage étant chauffé de manière à ce qu'il s'établisse une distribution de la température dans l'enrobage, la température diminuant en direction du fond de l'espace de construction en partant des zones de l'enrobage qui délimitent la surface frittée en dernier du pain de poudre, différentes zones de l'enrobage pouvant être soumises à des températures différentes, **caractérisé en ce que** le chauffage est effectué au moyen d'anneaux chauffants disposés en parallèle les uns au-dessus des autres qui sont disposés de manière concentrique autour de l'espace de construction.

2. Procédé selon la revendication 1, **caractérisé en ce que** les anneaux chauffants sont régulés de manière à ce que la distribution de la température diminue de manière essentiellement linéaire.

3. Procédé selon la revendication 1 ou 2, **caractérisé en ce que** le dispositif de chauffage d'enveloppe comprend également un chauffage du fond de l'espace de construction et que le chauffage du fond de l'espace de construction est commandé de telle manière que la température du fond de l'espace de construction coïncide à tout moment avec la température de la zone connexe de la paroi de l'espace de construction.

4. Procédé selon la revendication 1, **caractérisé en ce qu'**une distribution de la température du dispositif de chauffage d'enveloppe, laquelle a été optimisée en vue d'une réduction de l'étirement du composant, est prédéfinie par la simulation de l'apport énergétique du laser dans les couches de poudre, de la distribution de la température qui en résulte à l'intérieur du pain de poudre ainsi que de l'influence de cette distribution de la température par la superposition du dispositif de chauffage d'enveloppe.

5. Dispositif de frittage sélectif au laser d'une poudre comprenant un espace de construction d'enrobage pour recevoir la poudre et un dispositif de chauffage d'enveloppe qui entoure l'espace de construction, le dispositif de chauffage d'enveloppe pouvant soumettre à des températures séparées différentes zones de l'enveloppe, **caractérisé en ce que** le dispositif de chauffage d'enveloppe présente des anneaux chauffants disposés en parallèle les uns au-dessus des autres qui sont disposés de manière concentrique autour de l'espace de construction.

6. Dispositif selon la revendication 5, **caractérisé en ce que** l'espace de construction est de forme cylindrique.

7. Dispositif selon la revendication 6, **caractérisé en ce qu'**il présente au moins un dispositif de régulation pour réguler séparément les anneaux chauffants individuels.

8. Dispositif selon la revendication 7, **caractérisé en ce que** l'au moins un dispositif de régulation présente un module de saisie pour saisir une distribution de la température à régler au moyen des anneaux chauffants.

9. Dispositif selon l'une des revendications 5 à 8, **caractérisé en ce qu'**il présente en plus un dispositif de refroidissement actif.
